# EUROPÄISCHE PATENTSCHRIFT

(11) **EP 2 032 330 B1**
(45) Veröffentlichungstag und Bekanntmachung des Hinweises auf die Patenterteilung: **11.01.2012**
(21) Anmeldenummer: 07765431.7
(22) Anmeldetag: 14.06.2007
(51) Int. Cl.: B29C 45/73

(54) **Formnestkavität mit entkoppelter Kühlkanalführung**
Mould cavity with decoupled cooling-channel routing
Cavité de moule avec guidage de canal de refroidissement désaccouplé

(30) Priorität: 16.06.2006 DE 102006028149
(43) Veröffentlichungstag der Anmeldung: 11.03.2009
(73) Patentinhaber: MHT Mold & Hotrunner Technology AG, 65239 Hochheim (DE)
(72) Erfinder: NETER, Witold, Newnan, Georgia 30265 (US); THÖMMES, Helmut, 54441 Kastel (DE); HÖNISCH, Marek, 65510 Hünstetten (DE)
(74) Vertreter: Köppen, Manfred
(86) Internationale Anmeldenummer: PCT/EP2007/055920
(87) Internationale Veröffentlichungsnummer: WO 2007/144413

(56) Entgegenhaltungen:
- EP-A1- 0 117 010
- WO-A-2007/045074
- DE-A1- 2 037 365
- DE-A1- 4 234 961
- DE-A1- 10 209 174
- DE-A1- 19 903 699
- DE-U1-202005 008 170
- US-A- 3 191 225
- US-A- 3 887 350
- US-I4- T 949 004

## Beschreibung

Die vorliegende Erfindung betrifft eine Kavität für ein Formnest zur Herstellung von Hohlkörperformlingen mittels Spritzgießen.

Bei der Kunststoffverarbeitung stellt das Spritzgießen das wichtigste Verfahren zur Herstellung von Formteilen dar. Beim Spritzgießen wird die pulverförmige oder granulierte Formmasse, z. B. in einer Schneckenspritzgießmaschine, plastifiziert und dann in das geschlossene, im allgemeinen gekühlte Werkzeug, z. B. ein Formnest, gedrückt. Hat sich die Form bzw. der darin vorgesehene Formraum vollkommen mit der Schmelze gefüllt, so erstarrt diese durch Abkühlung. Dabei kommt es im allgemeinen zu einer Volumenverringerung. Diese wird häufig dadurch ausgeglichen, daß nochmals Schmelze aus dem Spritzzylinder in die Form nachgedrückt wird. Zusätzlich wird im allgemeinen die Schwindung auch durch ein entsprechendes Aufmaß in der Formkontur berücksichtigt. Schließlich wird das Werkzeug bzw. das Formnest geöffnet und das fertige Formteil (Spritzgußteil) entformt und ausgestoßen. Das Werkzeug kann wieder geschlossen werden und ein neuer Arbeitszyklus kann mit dem erneuten Einspritzen beginnen.

Mit Hilfe des Spritzgießens ist es möglich, Hohlkörper herzustellen, die in einem späteren Arbeitsschritt z. B. zu Flaschen oder Kanistern aufgeblasen werden können. Diese Hohlkörper werden auch als Preforms oder Vorformlinge bezeichnet.

Formnester zur Herstellung von Vorformlingen, die für das spätere Aufblasen in PET-Flaschen vorgesehen sind, bestehen üblicherweise aus einem Kern, einer Kavität, einem Bodeneinsatz und einer Halsbacke.

Im geschlossenen Zustand des Formnestes bildet sich zwischen dem Kern einerseits und Bodeneinsatz, Kavität und Halsbacke andererseits ein Formraum, dessen Form dem herzustellenden Formling entspricht. Die Außenkontur des Kerns bildet somit die Innenkontur des Hohlkörperformlings, während die Außenkontur des Hohlkörperformlings von Kavität, Bodeneinsatz und Halsbacke gebildet wird.

Die Kavität weist ein im wesentlichen hohlzylindrisches Element auf. Der Boden des Formraums wird von dem sich an die Kavität anschließenden Bodeneinsatz gebildet. Die Halsbacke schließt sich an der dem Bodeneinsatz abgewandten Seite an die Kavität an.

Mit anderen Wort wird durch Halsbacke, Kavität und Bodeneinsatz ein Hohlraum zur Verfügung gestellt, in den der Kern eindringt.

In der Regel werden alle Teile des Formnestes gekühlt. Daher weist die Kavität an der Außenseite des hohlzylindrischen Teils einen Kühlkanal auf. Üblicherweise besteht der Kühlkanal aus einer spiralförmigen Nut, die in die Außenseite des hohlzylindrischen Elements der Kavität eingebracht worden ist. Die Kavität wird im Betrieb zusammen mit den restlichen Teilen des Formnestes in eine sogenannte Kavitätenplatte eingesetzt. Die Kavitätenplatte weist eine entsprechende Ausnehmung auf. Der Kühlkanal wird dann einerseits von der spiralförmigen Nut und andererseits von der Innenwand der entsprechenden Ausnehmung in der Kavitätenplatte, die die spiralförmigen Nuten verschließt, gebildet. Meist ist die Kavitätenplatte für die Aufnahme einer Vielzahl von Formnestern, z.B. 192, ausgelegt.

Ein solches Formnest ist beispielsweise aus der WO 2005/051632 bekannt.

Das Einbringen der bekannten spiralförmigen Nuten in das Material der Kavität führt jedoch zu einer erheblichen Verringerung der Festigkeit bzw. Steifigkeit des hohlzylindrischen Elementes aufgrund der Kerbwirkung. Grundsätzlich führt jede Abweichung von einem kontinuierlichen Querschnitt zu einer Kerbspannung, die das Festigkeitsverhalten des Bauteils in negativer Weise verändert. Aus diesem Grunde muß das hohlzylindrische Element relativ dickwandig ausgeführt sein, um ein Brechen der Kavität im Betrieb zu vermeiden. Zudem müssen im Stand der Technik die Nuten mit ausgerundeten Nutgrund versehen sein, um das Festigkeitsverhalten nicht zu sehr zu beeinflussen. Grundsätzlich ist es jedoch wünschenswert das Kühlfluid möglichst nahe an den Formraum, in dem sich der herzustellende und daher rasch abzukühlende Formling befindet, heranzuführen. Eine dicke Wand und/oder ein abgerundeter Nutgrund sind daher eher von Nachteil.

Die bekannten spiralförmigen Nuten sind zudem relativ aufwendig in der Herstellung. Darüber hinaus hat sich gezeigt, daß aufgrund des spiralförmigen Verlaufs des Kühlkanals ein wesentlicher Teil des durch den Kühlkanal strömenden Kühlfluids aufgrund der Zentrifugalkraft nicht mit der Kavität in Kontakt tritt und daher auch nicht zur Kühlung beiträgt. Darüber hinaus fällt die abzuführende Wärme im wesentlichen am Nutgrund an, so daß sich innerhalb des Kühlfluids ein Temperaturgradient ausbildet, so daß die Temperatur des Kühlfluids von innen nach außen bzw. vom Nutgrund zur Innenwand der Kavitätenplattenausnehmung abnimmt. Daher strömen die kälteren Kühffluidbestandteile aufgrund ihrer größeren Dichte vorzugsweise im Außenbereich des spiralförmigen Kühlkanals, so daß gerade der Kühlfluidstrom, der für eine effektive Kühlung besonders bevorzugt ist, nur wenig zur Kühlung beiträgt.

Die WO 2007/045074, die Stand der Technik gemäß Artikel 54 (3) EPÜ darstellt, zeigt eine Kavität mit einem spiralförmigen Element.

Die DE 2037365 zeigt eine mehrteilige Blasform zum Herstellen von Hohlkörpern aus thermoplastischem Kunststoff. Diese Vorrichtung wird beispielsweise dafür verwendet, eingangs genannten Formling in einem weiteren Arbeitsschritt zu einem Hohlkörper, wie z. B. einer PET-Flasche, aufzublasen. Diese Blasform weist an ihrer Außenseite Leitbleche zur Weiterleitung des Kühlmittels auf.

Ausgehend von diesem Stand der Technik ist es daher die Aufgabe der vorliegenden Erfindung, eine Kavität bereitzustellen, die einfach herzustellen ist und die eine effektivere Kühlung der Kavität ermöglicht.

Erfindungsgemäß wird diese Aufgabe durch eine Kavität mit allen Merkmalen des Anspruchs 1 gelöst.

Es hat sich gezeigt, daß ein Hohlzylinder eine sehr hohe Festigkeit aufweist. Diese hohe Festigkeit nimmt erheblich ab, wenn die Außenseite des Hohlzylinder in irgendeiner Form bearbeitet wird. So zeigt überraschenderweise ein Hohlzylinder mit in die Außenseite eingefrästen Nuten gegenüber einem Hohlzylinder ohne Einfräsungen eine deutlich geringere Festigkeit und zwar selbst dann, wenn der Hohlzylinder mit eingefrästen Nuten am Nutgrund noch eine Wandstärke hat, die mit der Wandstärke des Hohlzylinders ohne Einfräsungen vergleichbar ist. Mit anderen Worten kann bei gleicher Festigkeit der Hohlzylinder ohne Einfräsungen mit geringerer Wandstärke ausgeführt werden als die Wandstärke des Nutgrundes eines Hohlzylinders mit eingefrästen Nuten. Da aber die Kühlwirkung um so größer und um so direkter ist je kleiner die Wandstärke, ist das Vorsehen eines Hohlzylinders ohne Ausnehmungen oder Ausfräsungen an seiner Außenfläche von großem Vorteil.

Da aber das Kühlfluid in irgendeiner Form über die Außenfläche des hohlzylindrischen Elements geführt werden muß, sind erfindungsgemäß Führungselemente vorgesehen, die als separates Element ausgeführt sind.

Prinzipiell ist es möglich, das Führungselement auf der Außenseite des hohlzylindrischen Elementes aufzulöten, anzuschweißen oder auf andere Weise zu befestigen. Es hat sich jedoch gezeigt, daß bei einer Befestigung auf der Außenseite des hohlzylindrischen Elements Spannungen auf die Kavität übertragen werden können, die die Festigkeit wieder reduzieren.

In einer bevorzugten Ausführungsform ist vorgesehen, daß sich an das hohlzylindrische Element an seiner Außenseite, im wesentlichen an seinen Enden jeweils ein über die Außenseite des hohlzylindrischen Elements hervorspringendes Ringelement anschließt, wobei die Führungselemente an den Ringelementen und vorzugsweise nicht am hohlzylindrischen Element befestigt sind.

Durch diese Art der Befestigung ist sichergestellt, daß nahezu keine Spannungen über das Führungselement auf die Kavität übertragen werden. Trotz sorgfältiger Ausgestaltung kann diese Ausführungsform jedoch dazu führen, daß die Führungselemente keine fluiddichte Verbindung zu der Außenfläche des hohlzylindrischen Elements bereitstellen. Man hat jedoch erkannt, daß diese Verbindung nicht fluiddicht ausgeführt werden muß.

Die Führungselemente sind in einer besonders bevorzugten Ausführungsform im wesentlichen lamellenförmig und besonders bevorzugt in axialer Richtung ausgerichtet. Durch die axiale Ausrichtung der Führungselemente wird beidseitig der Führungselemente jeweils ein im wesentlichen axial verlaufender Kühlkanalabschnitt zur Verfügung gestellt.

In einer besonders bevorzugten Ausführungsform werden die in Umfangsrichtung angeordneten Kühlkanalabschnitte durch in den Führungselementen vorgesehene Durchgangsöffnungen gebildet, wobei vorzugsweise die Durchgangsöffnungen im wesentlichen im Bereich eines Endabschnittes des Führungselementes vorgesehen sind. Das Kühlfluid fließt dann entlang der im wesentlichen axial angeordneten Kühlkanäle zwischen zwei benachbarten Führungselementen, tritt dann durch die Durchgangsöffnung im Führungselement in den benachbarten axial verlaufenden Kühlkanalabschnitt und fließt dort entgegengesetzt entlang des axialen Kühlkanalabschnittes. Durch die wechselweise im Endabschnitt der Führungselemente vorgesehene Durchgangsöffnung kann so ein mäanderförmiger bzw. zickzackförmiger Kühlkanal ausgebildet werden.

Die Führungselemente haben in einer bevorzugten Ausführungsform eine im wesentlichen rechteckförmige Querschnittsfläche. Dadurch können die Führungselemente recht kostengünstig hergestellt werden. Für manche Anwendungsfälle kann es jedoch von Vorteil sein, daß die Führungselemente eine im wesentlichen dreiecksförmige Querschnittsfläche haben.

Da die Kavität einschließlich der Führungselemente im Betrieb in eine entsprechende Hülse oder eine Kavitätenplatte mit entsprechender Ausnehmung eingesetzt werden, haben die Führungselemente in einer weiteren bevorzugten Ausführungsform eine an ihrer dem hohlzylindrischen Element abgewandten Seite abgerundete Form. Diese gekrümmte Fläche folgt vorzugsweise im wesentlichen der Mantelfläche eines Zylinders.

In einer weiteren besonders bevorzugten Ausführungsform weist der Kühlkanal mehrere sich im wesentlichen in axialer Richtung erstreckende Kühlkanalabschnitte und mindestens einen Verbindungsabschnitt auf, wobei der Verbindungsabschnitt zwei der sich im wesentlichen in axialer Richtung erstreckende Kühlkanalabschnitte verbindet.

Insbesondere die Kühlkanalabschnitte, die in axialer Richtung verlaufen, stellen eine sehr effiziente Kühlung zur Verfügung, da hier keine Zentrifugalkräfte für eine Trennung von kälterem und wärmerem Kühlfluid sorgen. Zudem findet die Hauptbelastung des Formnestes in axialer Richtung statt, so daß in axialer Richtung verlaufende Nuten das Festigkeitsverhalten aufgrund der Kerbwirkung weit weniger einschränken als in Umfangsrichtung verlaufende Nuten.

Es ist daher möglich und sogar aufgrund der verbesserten Benetzung sogar vorteilhaft, die in axialer Richtung angeordneten Kühlkanäle mit eben ausgeführtem Grund oder sogar mit nach innen gewölbtem Grund auszuführen.

Der Verbindungsabschnitt erstreckt sich vorzugsweise im wesentlichen in Umfangsrichtung.

Es versteht sich, daß der verbesserte Kühleffekt um so größer ist, je größer der Anteil an sich im wesentlichen in axialer Richtung erstreckenden Kühlkanalabschnitten an der gesamten Kühlkanallänge ist. Vorzugsweise ist die aufsummierte Länge aller im wesentlichen axial verlaufenden Kühlkanäle mindestens doppelt so groß, vorzugsweise mindestens fünfmal so groß und besonders bevorzugt mindestens zehnmal so groß wie die aufsummierte Länge aller Verbindungsabschnitte.

Daher ist in einer bevorzugten Ausführungsform vorgesehen, daß mindestens 4, vorzugsweise mindestens 8 und besonders bevorzugt mindestens 12 sich im wesentlichen in axialer Richtung erstreckende Kühlkanalabschnitte vorhanden sind. Diese sind dann durch sich im wesentlichen in Umfangsrichtung erstreckenden Kühlkanalabschnitte verbunden.

Der Kühlkanal ist somit im wesentlichen mäanderförmig ausgebildet.

Es gibt Ausführungsformen, bei denen die Kavität ein Kragenteil mit einer Durchgangsöffnung aufweist, wobei das hohlzylindrische Element zum Teil in der Durchgangsöffnung angeordnet ist, so daß die Durchgangsöffnung zum Teil von dem hohlzylindrischen Element ausgefüllt wird. Der nicht von dem hohlzylindrischen Element ausgefüllte Teil der Durchgangsöffnung dient dann der Aufnahme eines Außenkonus der Halsbacke.

Die erfindungsgemäße Anordnung der Kühlkanalabschnitte erlaubt es in einer besonders bevorzugten Ausführungsform, daß sich zumindest ein Teil der sich in axialer Richtung erstreckenden Kühlkanalabschnitte zumindest teilweise bis in das Kragenteil hineinerstreckt. Im Gegensatz zum Stand der Technik kann somit das Kragenteil selbst direkt mit Kühlfluid gekühlt werden. Bei den bekannten Kavitäten erfolgte die Kühlung des Kragenteils lediglich durch Wärmeleitung innerhalb der Kavität, was zu einer deutlich verminderten Kühlleistung führte.

In einer weiteren besonders bevorzugten Ausführungsform ist zumindest ein Teil der sich im wesentlichen in Umfangsrichtung erstreckenden Kühlkanalabschnitte an einer Stirnseite des hohlzylindrischen Teils angeordnet, wobei vorzugsweise ein Verschlußelement vorgesehen ist, welches die an der Stirnseite des hohlzylindrischen Elementes angeordneten, im wesentlichen in Umfangsrichtung verlaufenden Kühlkanalabschnitte stirnseitig verschließt.

So ist es beispielsweise möglich, die im wesentlichen in axialer Richtung verlaufenden Kühlkanalabschnitte zum Teil als Axialbohrungen auszuführen, die sich beispielsweise bis in das Kragenteil hineinerstrecken. Am stirnseitigen Ende des hohlzylindrischen Elementes werden dann Ausnehmungen in das hohlzylindrische Element eingebracht, die jeweils zwei benachbarte, im wesentlichen in axialer Richtung verlaufende Kühlkanäle verbinden. Anschließend wird die Stirnseite des hohlzylindrischen Elementes mit dem Verschlußelement abgedeckt. Das Verschlußelement kann beispielsweise an das hohlzylindrische Element angelötet sein.

Die Ausnehmungen, die jeweils zwei benachbarte, im wesentlichen in axialer Richtung verlaufende Kühlkanalabschnitte verbinden, bilden hier die Verbindungsabschnitte, die im wesentlichen in Umfangsrichtung angeordnet sind.

Grundsätzlich kann das Verschlußelement jede beliebige Form haben und zudem mehrteilig ausgeführt sein. In einer besonders bevorzugten Ausführungsform ist das Verschlußelement im wesentlichen ringförmig ausgebildet und weist in einer besonders bevorzugten Ausführungsform an der den Kühlkanalabschnitten abgewandten Seite einen Innenkonus auf. Dies ist insbesondere bei der Verwendung einer Kavität mit Kragenteil von Vorteil, da dadurch das Kragenteil einfacher hergestellt werden kann. Grundsätzlich muß die Durchgangsöffnung im Kragenteil, die nicht von dem hohlzylindrischen Element ausgefüllt wird, ein Abschnitt mit Innenkonus aufweisen, damit dieser mit einem entsprechenden Außenkonusabschnitt der Halsbacke zusammenwirken kann. Durch die konische Ausführung des Verschlußelements kann die Durchgangsöffnung im Kragenteil als Durchgangsbohrung ausgebildet sein, wobei der Innenkonus dann durch das Verschlußelement gebildet wird.

Gemäß einer weiteren alternativen Ausführungsform ist vorgesehen, daß als Führungselemente zwei Kammelemente mit Zinken vorgesehen sind, die derart angeordnet sind, daß die Zinken der beiden Kammelemente jeweils in die Zinkenzwischenräume des anderen Kammelementes eingreifen.

Durch diese verzahnte Struktur wird auf einfache Weise ein zickzackförmiger Kühlkanal zur Verfügung gestellt.

Die Kammelemente bestehen beispielsweise jeweils aus einem Ringelement und mindestens einem, vorzugsweise mehreren sich von dem Ringelement in Richtung der Ringachse erstreckenden Zinkenelementen. Diese Kammelemente können auf die Außenseite des hohlzylindrischen Elements aufgeschoben werden.

Die vorliegende Erfindung betrifft ebenso ein Formnest mit der beschriebenen Kavität sowie ein Werkzeug mit einem solchen Formnest.

Dabei wird in dem Werkzeug in einer besonders bevorzugten Ausführungsform eine Kühlfluidzufuhr und eine Kühlfluidabfuhr derart angeordnet, daß sich durch die Kühlkanalstruktur der Kavität zwei parallele Kühlkreisläufe bilden. Mit anderen Worten teilt sich der von einer Seite zur Kavität zugeführte Kühlfluidstrom und umfließt in zwei getrennten Fluidströmen die Kavität jeweils mit einem Umfangswinkel von etwa 180 °. Auf der der Kühlfluidzufuhr in etwa gegebenüberliegenden Seite der Kavität ist dann die Kühlfluidabfuhr angeordnet, wo sich die beiden Kühlfluidströme wieder vereinigen.

In einer weiteren besonders bevorzugten Ausführungsform ist in einer Ausnehmung in der Kavitätenplatte des Werkzeuges ein Kühlfluidverteiler angeordnet, welcher zumindest zwei im wesentlichen axial verlaufende Kühlabschnitte des hohlrylindrischen Elementes über einen innerhalb des Kühlfluidverteilers angeordneten Verbindungskanal miteinander verbindet, so daß der Verbindungskanal einen im wesentlichen in Umfangsrichtung angeordneten Kühlkanalabschnitt bildet.

Weitere Vorteile, Merkmale und Anwendungsmöglichkeiten werden deutlich anhand der folgenden Beschreibung bevorzugter Ausführungsformen sowie der dazugehörigen Figuren. Es zeigen:
- Figur 1: eine perspektivische Ansicht einer ersten Ausführungsform einer Kavität,
- Figur 1a-1c: mehrer Detailansichten des Führungselementes der ersten Ausführungsform.
- Figur 2: eine Schnittansicht der in Figur 1 gezeigten Ausführungsform im in das Werkzeug eingesetzten Zustand,
- Figur 3: eine Schnittansicht entlang der Linie A-A in Figur 2,
- Figur 4: eine Schnittansicht der Kavität von Figur 1,
- Figur 5: eine schematische Darstellung des Fluidverlaufs in der Kavität,
- Figur 6: eine Seitenansicht und eine Ansicht von unten auf eine zweite Ausführungsform der Erfindung,
- Figur 7: die Seitenansicht von Figur 6 mit schematisch eingezeichnetem Fluidverlauf,
- Figur 8: eine Schnittansicht der in den Figuren 6 und 7 gezeigten zweiten Ausführungsform im in das Werkzeug eingesetzten Zustand,
- Figur 9: eine dritte Ausführungsform der erfindungsgemäßen Kavität,
- Figur 10: einen Ausschnitt von Figur 9 mit schematisch dargestelltem Fluidverlauf,
- Figur 11: eine Seitenansicht auf ein Umlenkelement,
- Figur 12: eine Schnittansicht entlang der Linie A-A von Figur 11,
- Figur 13: eine Schnittansicht entlang der Linie B-B von Figur 11,
- Figur 14: eine Schnittansicht der dritten Ausführungsform im in das Werkzeug eingesetzten Zustand, wobei das Umlenkelement modifiziert wurde,
- Figur 15: eine Draufsicht auf das modifizierte Umlenkelement mit eingezeichnetem Fluidverlauf,
- Figur 16: eine Schnittansicht entlang der Linie A-A von Figur 15,
- Figur 17: eine Schnittansicht entlang der Linie B-B von Figur 15,
- Figur 18: eine Schnittansicht entlang der Linie C-C von Figur 15,
- Figur 19: eine Schnittansicht einer vierten Ausführungsform einer erfindungsgemäßen Kavität,
- Figur 20: eine Schnittansicht einer Kavitätserweiterung,
- Figur 21: eine Schnittansicht der vierten Ausführungsform der Figuren 19 und 20 im in das
- Figur 22: Werkzeug eingesetzten Zustand, eine schematische Teilschnittansicht einer Ausführungsform, die nicht zur Erfindung gehört,
- Figur 23: eine Längsschnittansicht einer Ausführungsform, die nicht zur Erfindung gehört
- Figur 24: eine Querschnittsansicht der Ausführungsform von Figur 23,
- Figur 25: eine Schnittansicht einer fünften Ausführungsform sowie schematische Darstellungen des Strömungsverlaufs
- Figur 26: eine perspektivische Ansicht einer sechsten Ausführungsform, die nicht zur Erfindung gehört,
- Figur 27: eine perspektivische Ansicht des Mantelelementes der Ausführungsform von Figur 26,
- Figur 28: eine perspektivische Ansicht des Basiselementes der Ausführungsform von Figur 26,
- Figur 29: eine Explosionsansicht der Ausführungsform von Figur 26,
- Figur 30: eine perspektivische Ansicht des Mantelelementes der sechsten Ausführungsform im ebenen Zustand und
- Figur 31: schematische Skizzen einer siebten Ausführungsform, die nicht zur Erfindung gehört.

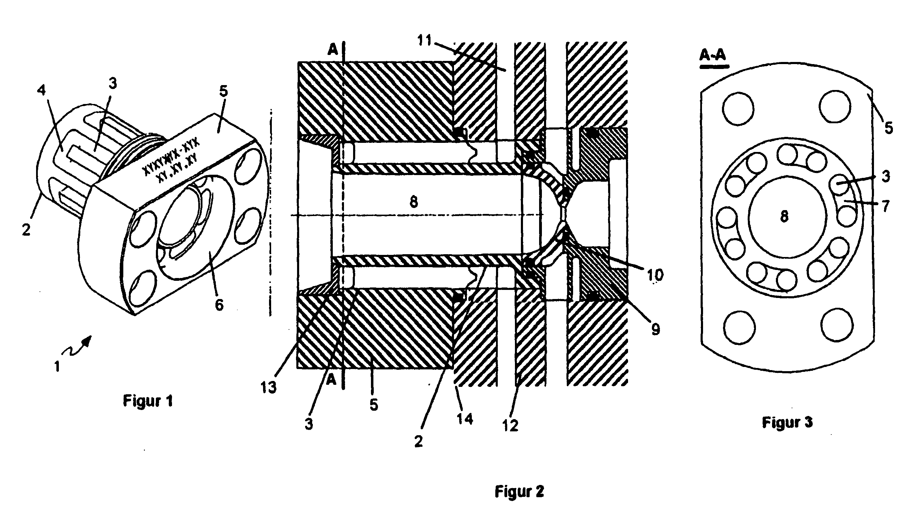

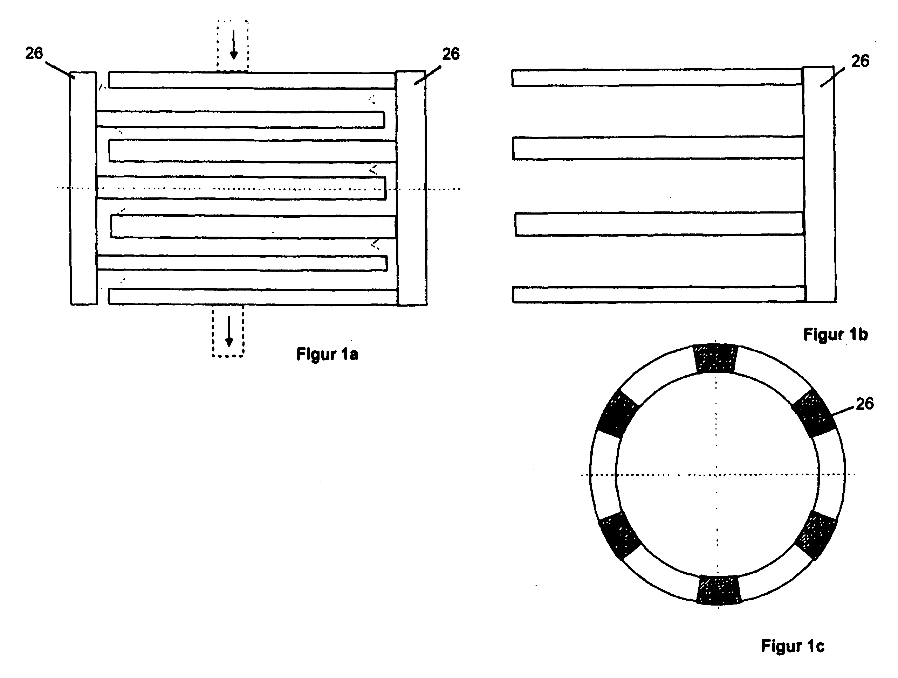

Figur 1 zeigt eine perspektivische Ansicht einer ersten Ausführungsform der erfindungsgemäßen Kavität 1. Die Kavität 1 weist einen hohlzylindrischen Abschnitt 2 und ein Kragenelement 5 auf. Wie insbesondere in der Schnittansicht von Figur 2 zu erkennen ist, weist das Kragenelement 5 eine Durchgangsöffnung auf, in die das hohlzylindrische Element 2 teilweise eindringt. An der Außenseite des hohlzylindrischen Elements ist ein Kühlkanal 3, 4 zu erkennen. Der Kühlkanal 3, 4 besteht aus im wesentlichen in axialer Richtung verlaufenden Kühlkanalabschnitten 3 sowie aus im wesentlichen in Umfangsrichtung verlaufenden Verbindungsabschnitten 4. Das Kragenelement 5 weist auf der dem hohlzylinderförmigen Element 2 abgewandten Seite eine Ausnehmung 6 auf, die zur Aufnahme einer Halsbacke dient.

Der Kühlkanal wird hier durch zwei Kammelemente 26 gebildet. Ein solches Kammelement ist in Figur 1 b und 1 c deutlicher zu erkennen. Das Kammelement besteht aus einem ringförmigen Abschnitt und mehreren (im gezeigten Beispiel sechs) Zinken, die sich in axialer Richtung von dem Ringabschnitt ausgehend erstrecken. Zwei solcher Kammelemente 26 sind wie in Figur 1a gezeigt angeordnet Die Zinken eines Kammelementes 26 greifen jeweils in die Zinkenzwischenräume des anderen Kammelementes 26 ein, so daß die Zinken eine verzahnte, im wesentlichen mäanderförmige Struktur bilden. In Figur 1a ist der vorgesehen Fluidstrom durch Pfeile schematisch dargestellt.

Figur 2 zeigt eine Schnittansicht der in Figur 1 gezeigten Ausführungsform der Kavität bei in das Werkzeug eingesetzten Zustand.

Das Werkzeug beinhaltet hier eine Kavitätenplatte 14, die meist eine ganze Reihe von Ausnehmungen, z. B. 48 oder 96, aufweist, in die jeweils eine erfindungsgemäße Kavität 1 eingesetzt wird.

Im Werkzeug schließt sich an den hohlzylindrischen Abschnitt 2 der Bodeneinsatz 9, 10 an, der hier zweiteilig ausgeführt ist. Dadurch, daß der Kühlkanal in der Außenwand des hohlzylindrischen Elements in die Kavitätenplatte 14 eingesetzt wird, wird der Kühlkanal einerseits durch die eingefrästen Kühlnuten und andererseits durch die Innenwand der Ausnehmungen in der Kavitätenplatte 14 gebildet.

Die Kavitätenplatte 14 hat einen Fluidzulauf 11 und einen Kühlfluidablauf 12. Deutlich zu erkennen ist, daß sich die axial orientierten Kühlkanalabschnitte 3 bis in den Kragenabschnitt 5 erstrecken. Vorgesehen ist, daß das Kühlfluid mäanderförmig bzw. zickzackförmig die Kavität 1 umströmt. Um an der Stirnseite der Kavität 1 zueinander benachbarte axial verlaufende Kühlkanalabschnitte 3 miteinander zu verbinden, sind Ausnehmungen 7 in das Material eingebracht.

Zum Verschließen des Kühlkanals ist ein Verschließelement 13 vorgesehen, das stirnseitig auf dem hohlzylinderförmigen Element aufsitzt. Das Verschließelement 13 ist im wesentlichen ringförmig und hat einen Innenkonus, der zur Aufnahme eines entsprechenden Außenkonus einer Halsbacke vorgesehen ist.

Deutlich zu erkennen ist in Figur 2, daß das hohlzylindrische Element 2 der Kavität 1 zusammen mit dem Bodeneinsatz 9, 10 einen Formraum 8 bildet, in dem der herzustellende Formling gebildet wird.

Zur Verdeutlichung der Verbindungskanäle 7 ist in Figur 3 eine Schnittansicht entlang der Linie A-A von Figur 2 gezeigt.

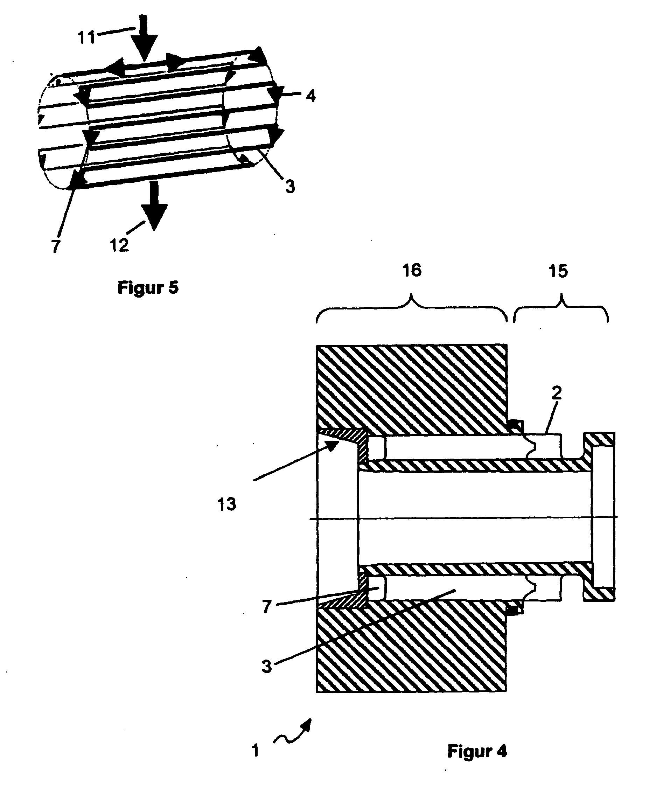

In Figur 4 ist ein Längsschnitt durch die Kavität 1 dargestellt. Die Kavität 1 besteht aus einem Abschnitt 15, der dafür vorgesehen ist, in die Kavitätenplatte 14 eingesetzt zu werden, und einem Abschnitt 16, der außerhalb der Kavitätenplatte 14 verbleibt. Das Kragenelement 5 sitzt dabei auf der Oberfläche der Kavitätenplatte 14 auf.

In Figur 5 ist schematisch der Fluidverlauf entlang der Außenseite der Kavität 1 dargestellt. Über den Fluidzulauf 11 wird Kühlfluid zugeführt, das sich in zwei parallel geschaltete Kühlfluidpfade trennt. Das Kühlfluid folgt nun der mäanderförmigen Anordnung des Kühlkanals und durchfließt abwechselnd in Axialrichtung ausgerichtete Kühlkanalabschnitte 3 und in Umfangsrichtung ausgerichtete Kühlkanalabschnitte 4, 7. Die beiden Kühlfluidpfade vereinigen sich am Kühfluidablaß 12 wieder.

Es ist deutlich zu erkennen, daß der Anteil der im wesentlichen axial ausgerichteten Kühlkanalabschnitte 3 in der Summe wesentlich länger ist als die Kühlkanalabschnitte 4, 7, die im wesentlichen in Umfangsrichtung ausgerichtet sind. Erfindungsgemäß ist ein Strömungsverlauf parallel zur Achse des hohlzylindrischen Elements 2 von Vorteil.

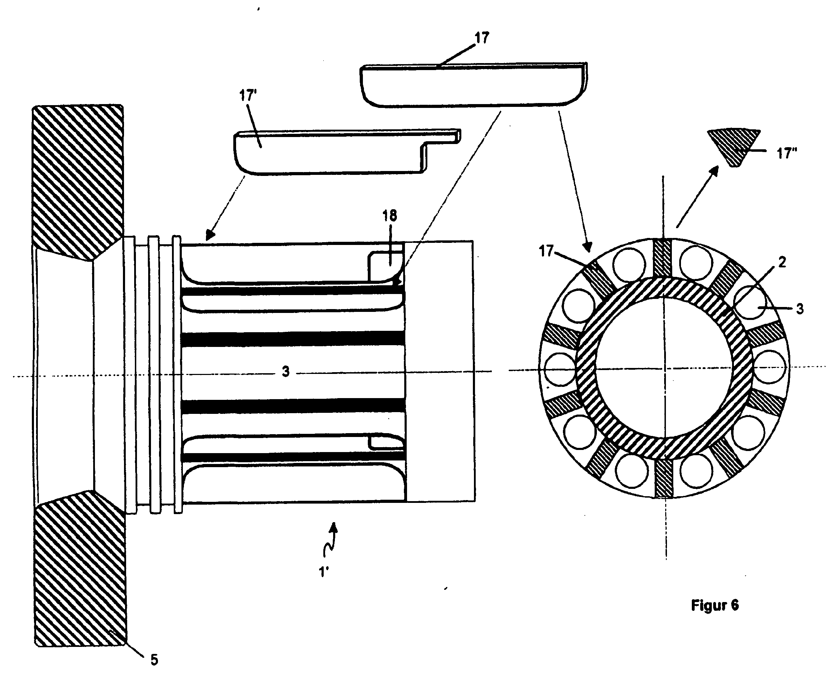

In Figur 6 ist eine Seitenansicht und eine Ansicht von unten auf eine zweite Ausführungsform einer erfindungsgemäßen Kavität gezeigt. Hier sind die Kühlkanalabschnitte nicht in die Außenwand des hohlzylindrischen Elements 2 eingebracht, sondern werden durch Führungselemente 17, 17', 17" gebildet, die an der Außenwand des hohlzylindrischen Elements 2 anschließen. Die Führungselemente können, wie dies beispielhaft anhand des Führungselements 17' gezeigt ist, eine Durchgangsöffnung 18 aufweisen, die eine Verbindung zu benachbarten axial verlaufenden Kühlkanalabschnitten bereitstellt. Die Führungselemente 17, 17', 17" können lamellenförmig mit rechteckigem Querschnitt oder wie beispielhaft anhand des Führungselements 17" dargestellt ist, im wesentlichen dreiecksförmig sein.

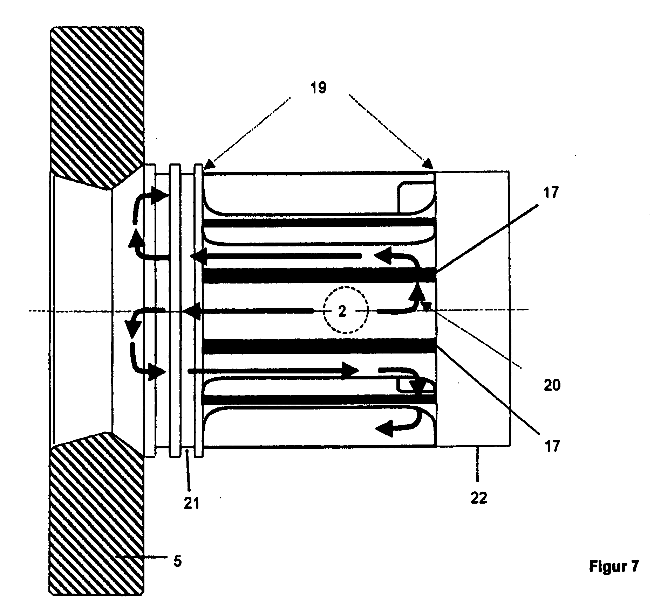

In Figur 7 ist noch einmal die zweite Ausführungsform der Kavität 1' gezeigt, wobei hier zusätzlich schematisch das Muster des Kühlfluidflusses eingezeichnet wurde. Das Kühlfluid trifft an der mit dem gestrichelten Kreis markierten Stelle auf das hohlzylindrische Element 2. Aufgrund der Führungselemente 17 wird der Kühlfluidfluß aufgeteilt und fließt sowohl nach links als auch nach rechts entlang des axial verlaufenden Kühlkanalabschnittes. Am Ende dieses axial verlaufenden Kühlkanalabschnittes tritt das Kühlfluid durch eine entsprechende Durchgangsöffnung in den benachbarten axial verlaufenden Kühlkanalabschnitt über und strömt dort entgegengesetzt wieder in axialer Richtung. Im Ergebnis erhält man eine Zickzackstruktur oder Mäanderstruktur des Kühlfluidflusses.

Deutlich zu erkennen ist, daß das hohlzylindrische Element 2 beidseitig an seinen Endabschnitten hervorspringende Ringelemente 21, 22 aufweist. Die Führungselemente 17 sind z.B. mit Hilfe von Schweißpunkten 19 lediglich an diesen Ringelementen 21 und 22 befestigt, so daß von den Führungselementen 17 keine Kraft oder Verspannung auf das hohlzylindrische Element 2 ausgeübt wird. Diese Kräftefreiheit ermöglicht es, daß die Wanddicke des hohlzylindrischen Elementes 2 sehr gering ausgeführt werden kann, ohne daß die Stabilität der Kavität eingeschränkt wird. Dadurch kann das Kühlfluid näher an den Formraum 8 herangeführt werden und somit kann die Kühlung effizienter erfolgen, was zu einer Verkürzung der Zykluszeit, d.h. der Zeit, während der der Vorformling sich im Formraum 8 befinden muß, führt.

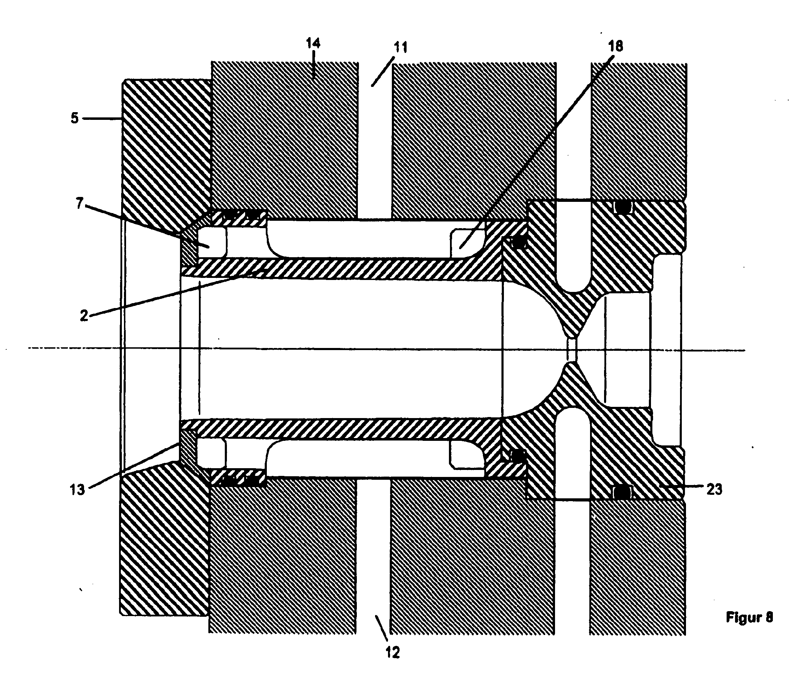

In Figur 8 ist eine Schnittansicht der zweiten Ausführungsform in eingesetztem Zustand dargestellt. Hier ist der Bodeneinsatz einteilig ausgeführt und mit der Bezugszahl 23 versehen. Man erkennt, daß die Führungselemente 17 lediglich an dem Abschnitt des hohlzylindrischen Elements 2 angeordnet sind, der außerhalb des Kragenelements 5 liegt. Das Kragenelement 5 oder das Ringelement 21 ist wie bereits im Zusammenhang mit der ersten Ausführungsform beschrieben, ausgeführt. D.h., die Verbindung zwischen benachbarten axial ausgerichteten Kühlkanalabschnitten erfolgt durch eine in Umfangsrichtung ausgebildete Ausnehmung, die mittels des Verschließelementes 13 abgedeckt ist.

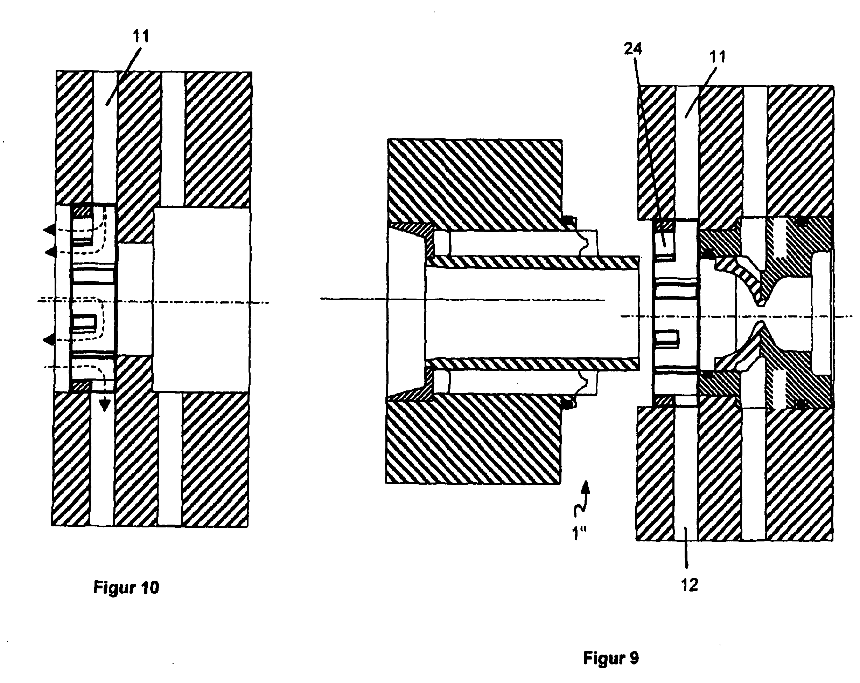

In Figur 9 ist eine dritte Ausführungsform einer erfindungsgemäßen Kavität dargestellt. Hier werden die Führungselemente durch das Umlenkelement 24 gebildet, das in die Kavitätenplatte zwischen Bodeneinsatz 9, 10 einerseits und Kavität 1" andererseits eingepreßt wurde. Dieses Umlenkelement 24 ist in Figur 10 noch einmal gesondert im eingebauten Zustand dargestellt, wobei hier mit Hilfe von Pfeilen die Richtung des Fluidstroms dargestellt wird.

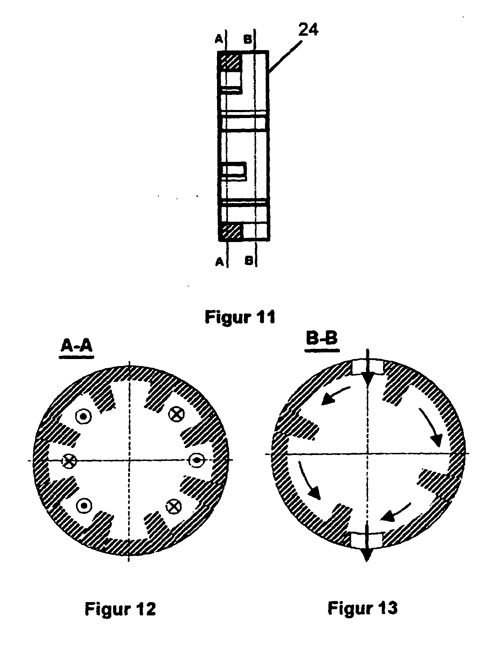

In den Figuren 11 bis 13 ist das Umlenkelement 24 zur Verdeutlichung noch einmal in Seitenansicht und in zwei Schnittansichten dargestellt.

Dabei ist der Kühlfluidfluß durch Pfeile bzw. Kreissymbole dargestellt.

In Figur 12 soll das Symbol, bestehend aus einem Kreis, in dem ein "X" eingeschlossen ist, eine Strömungsrichtung in die Zeichnungsebene hinein darstellen, während das Symbol, das aus einem Kreis besteht, der in einem Kreis angeordnet ist, eine Strömungsrichtung aus der Zeichnungsebene heraus andeuten soll.

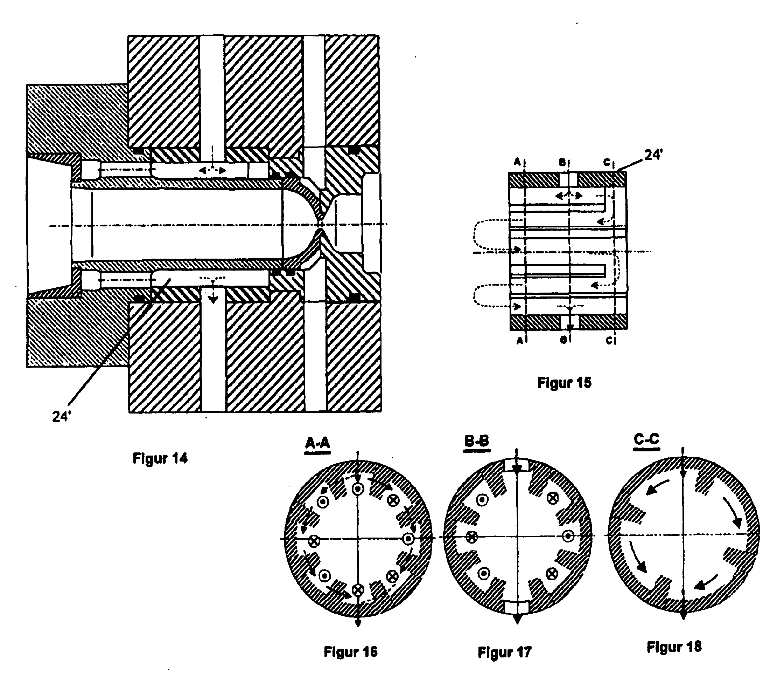

In Figur 14 ist eine Schnittansicht dieser Ausführungsform im in das Werkzeug eingesetzten Zustand dargestellt. Hierbei wurde jedoch ein etwas längeres Umlenkelement 24' verwendet, das in den Figuren 15 bis 18 noch einmal in Seiten- und Schnittansichten dargestellt ist.

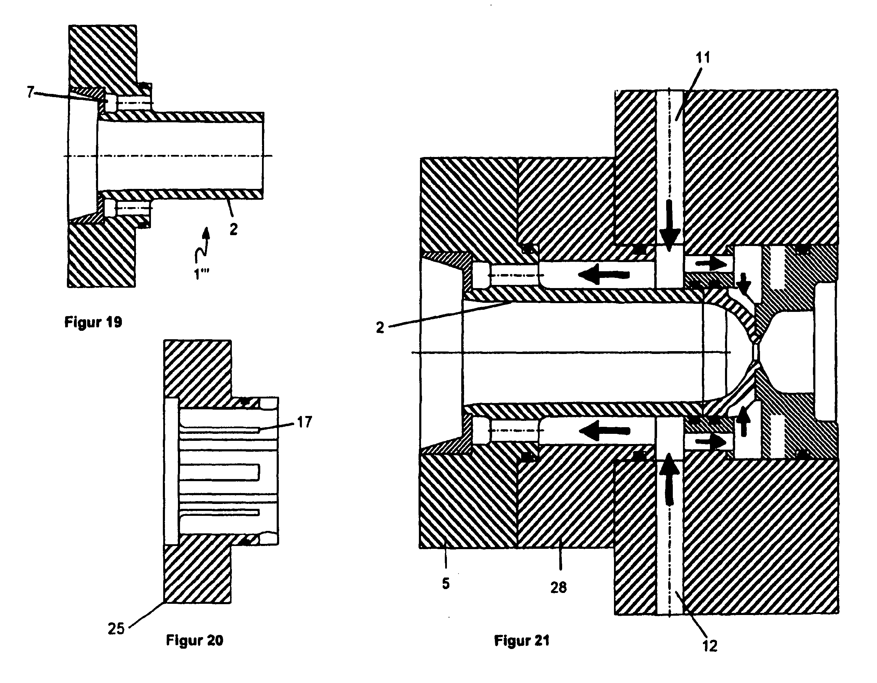

Schließlich ist in den Figuren 19 bis 21 eine vierte Ausführungsform der erfindungsgemäßen Kavität 1"' dargestellt. Die Kavität 1"' besteht wieder aus einem hohlzylindrischen Element 2, an das sich ein Kragenelement 5 anschließt. An der Außenseite des hohlzylindrischen Elements 2 innerhalb des Kragenelements 5 sind entsprechende in Längsrichtung bzw. Axialrichtung verlaufende Bohrungen eingebracht, die zum Teil die in Axialrichtung verlaufende Kühlkanalabschnitte bilden. Jeweils benachbarte axial verlaufende Kühlkanalabschnitte sind mit Hilfe der Ausnehmungen 7 verbunden. An der dem Werkzeug bzw. der Kavitätenplatte abgewandten Seite der Kavität entspricht diese Ausführungsform der in den Figuren 1 bis 3 gezeigten Ausführungsform. Im Unterschied zu der in den Figuren 1 bis 3 gezeigten Ausführungsform sind hier an der Außenseite des hohlzylindrischen Elements 2 keine Kühlnuten eingebracht. Des weiteren werden hier keine Führungselemente aufgeschweißt. Statt dessen ist eine Kavitätenerweiterung 25 vorgesehen, die in Form einer Hülse auf die Außenfläche des hohlzylindrischen Elementes 2 aufgesteckt wird. Die Kavitätenerweiterung 25 weist an ihrer Innenseite entsprechende Führungselemente 17 auf. Diese Führungselemente 17 sorgen für den erfindungsgemäßen mäanderförmigen Kühlfluidfluß, der im wesentlichen in axialer Richtung erfolgt. In Figur 21 ist die Kavität 1"' im in das Werkzeug eingesetzten Zustand gezeigt. Diese Ausführungsform hat darüber hinaus den Vorteil, daß die Kühlfluidzufuhr 11 bzw. Kühlfluidzufuhr 12 sowohl für die Kühlfluidzufuhr für die Kavität 1 "' als auch für die Kühlfluidzufuhr für den Bodeneinsatz 9, 10 vorgesehen ist.

Da es möglicherweise gewünscht ist, den herzustellenden Formling zu verändern, z. B: eine etwas andere Länge auszuwählen, muß dann lediglich die Kavität 1"' einschließlich der Kavitätenerweiterung 25 durch entsprechend modifizierte Teile ersetzt werden. Die Kavitätenplatte sowie der Bodeneinsatz kann beibehalten werden. Mit anderen Worten kann die Kavitätenplatte für eine Vielzahl von unterschiedlichen Werkzeugen verwendet werden. Üblicherweise bieten die Hersteller solcher Spritzgießsysteme diese für eine Vielzahl von unterschiedlichen Vorformlinggeometrien an.

Verlangt der Kunde nach einem Spritzgießsystem zur Herstellung von Vorformlingen einer anderen Länge, so ist bei den Systemen des Standes der Technik die Anpassung der Kavitätenplatte notwendig. Die Kavitätenplatte kann daher erst hergestellt werden, wenn die exakte Länge des Vorformlings bekannt ist. Durch die Verwendung der erfindungsgemäßen Kavitätenerweiterung wird die Dicke der Kavitätenplatte von der Länge des herzustellenden Vorformlings unabhängig, so daß die Kavitätenplatte bereits als Standardteil hergestellt werden kann, bevor überhaupt bekannt ist, wie der herzustellende Vorformling aussieht. In Abhängigkeit von der Länge des herzustellenden Vorformlings müssen dann lediglich die entsprechenden Kavitätenerweiterungen hergestellt werden.

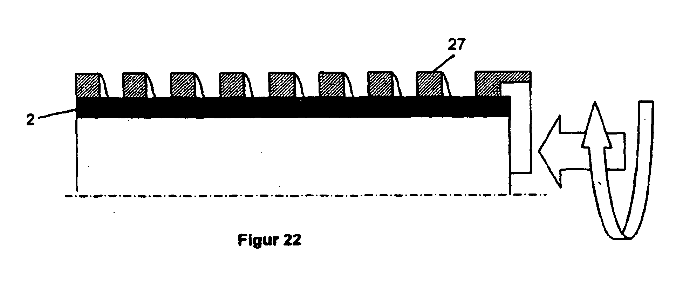

In Figur 22 ist eine weitere Ausführungsform einer Kavität zu sehen, welche nicht zur Erfindung gehört. Hier wird das Führungselement durch ein Spiralelement 27 gebildet, welches auf das hohlzylindrische Element 2 aufgeschoben ist. Das Spiralelement besteht hier aus einer Hülse, in die eine durchgehende, spiralförmige Ausnehmung eingebracht worden ist. Man erkennt sofort, daß das Spiralelement eine gewisse Flexibilität mit sich bringt. Bei der Anpassung des Spiralelementes 27 auf das hohlzylindrische Element 2 kann ein Ende des Spiralelementes in Umfangsrichtung gedreht und/oder in Axialrichtung auf dem hohlzylindrischen Element 2 verschoben werden, wie in Figur 22 durch die Pfeile angedeutet wird. Es wird deutlich, daß durch eine Drehung der beiden Enden des Spiralelementes in Umfangsrichtung, der Durchmesser des Spiralelementes entweder größer oder kleiner wird. Für die Montage werden daher die Enden des Spiralelementes zunächst in Umfangsrichtung relativ zueinander verdreht, um den Durchmesser zu vergrößern. Das Spiralelement 27 kann dann auf das hohlzylindrische Element geschoben werden. Beim Loslassen des Spiralelementes 27 wird sich das Spiralelement von selbst an die Oberfläche des hohlzylindrischen Elements anlegen. Durch das erfindungsgemäße Spiralelement wird somit eine Art Selbstklemmung erzielt, so daß meist keine zusätzliche Befestigung notwendig ist.

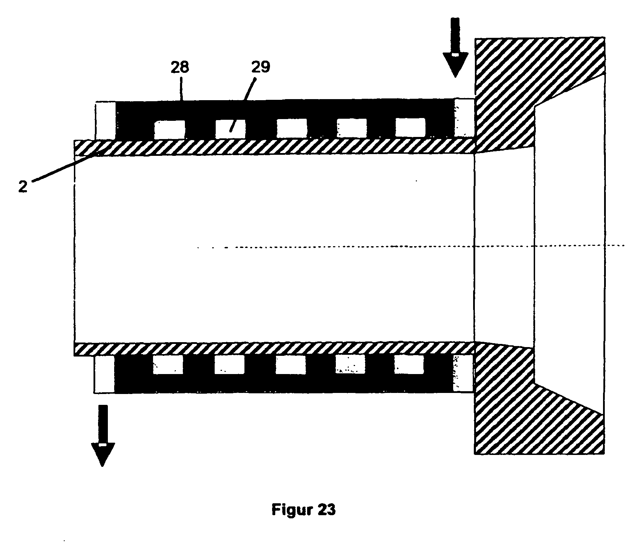

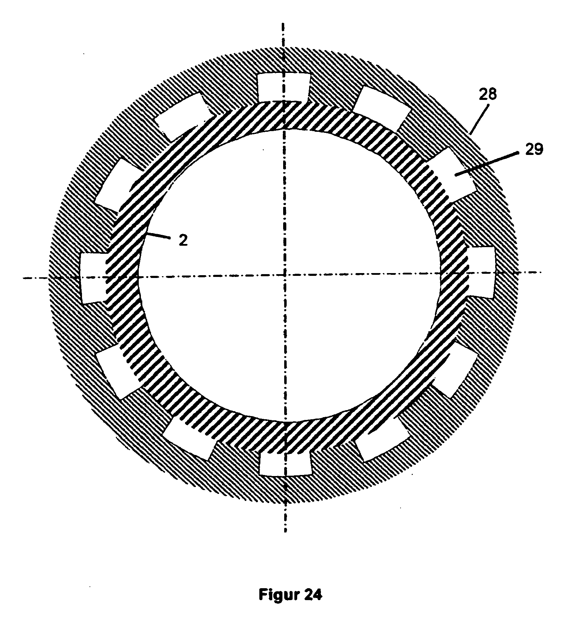

Weiterhin ist in Figur 23 und 24 eine weitere Ausführungsform einer Kavität gezeigt, die nicht zur Erfindung gehört. Hier wird das Führungselement durch eine Hülse 28 gebildet, in die eine spiralförmige Nut 29 eingebracht worden ist Figur 23 zeigt eine Längsschnittansicht und Figur 24 eine Querschnittsansicht.

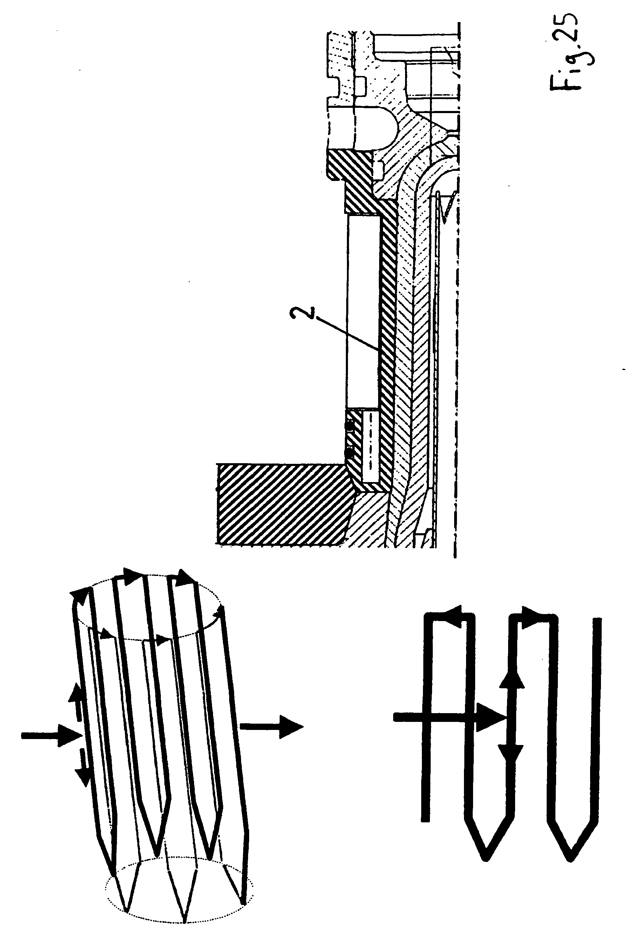

In Figur 25 ist eine Schnittansicht einer fünften Ausführungsform dargestellt. Diese Ausführungsform entspricht im wesentlichen der Ausführungsform von Figur 8, wobei hier die Verbindungskanäle nicht durch eine im Umfangsrichtung ausgebildete Ausnehmung, welche mit einem Verschließelement abgedeckt ist, verwirklicht, sondern durch zwei gegenüber der Axialrichtung geneigte Sackbohrungen, wobei sich zwei Sackbohrungen treffen und somit einen V-förmigen Verbindungskanal verwirklichen.

Es ergibt sich daher der in der Figur links dargestellte Verlauf der Kühlflukiströmung.

Durch die erfindungsgemäße Maßnahme wird eine effiziente Kühlung der Kavität erreicht.

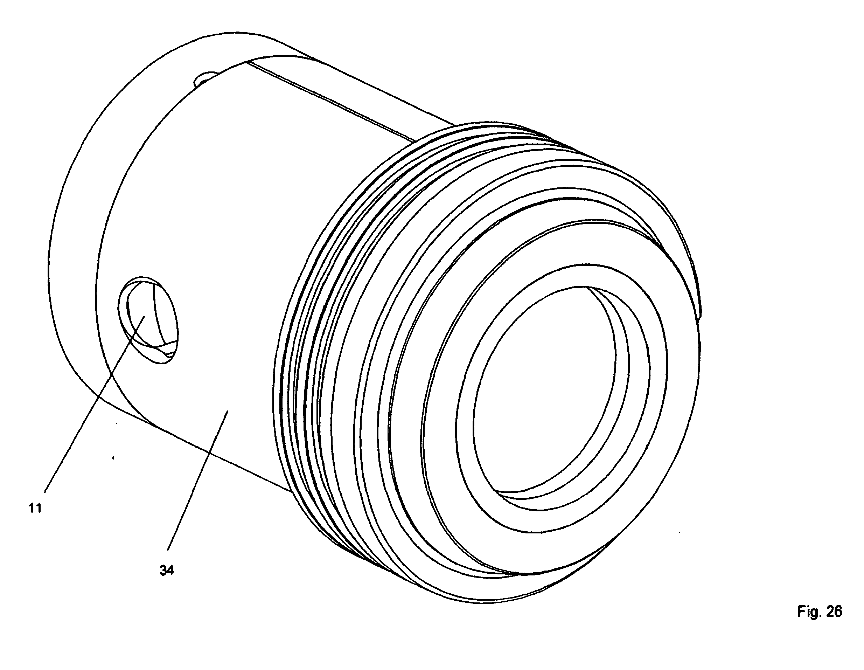

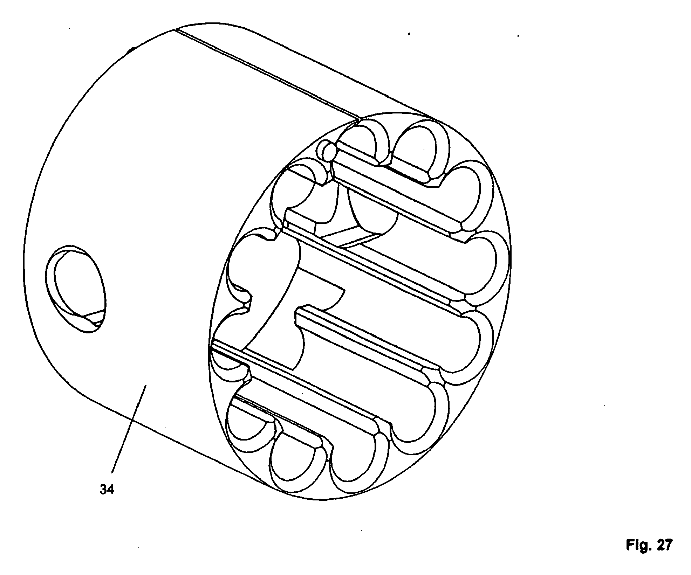

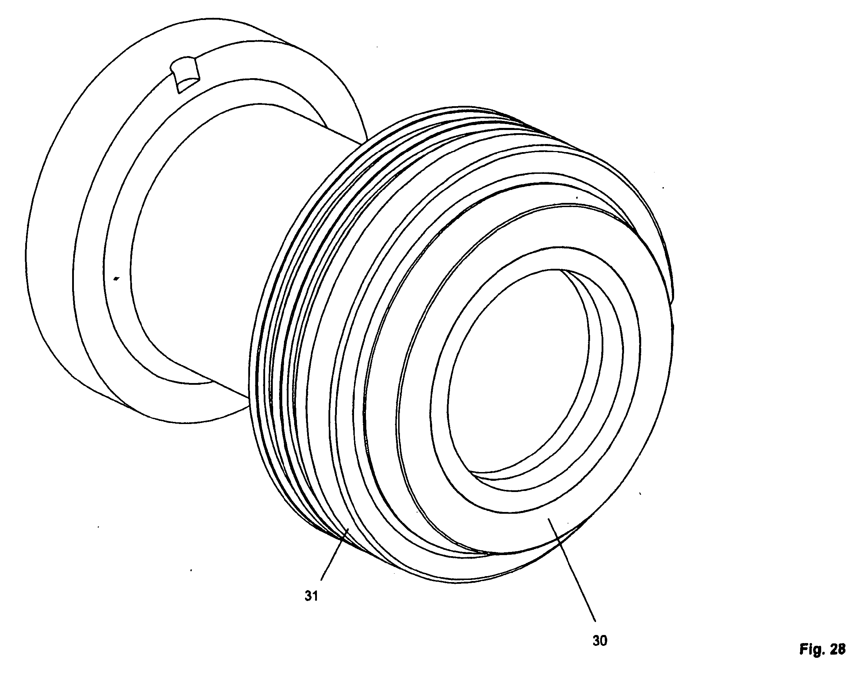

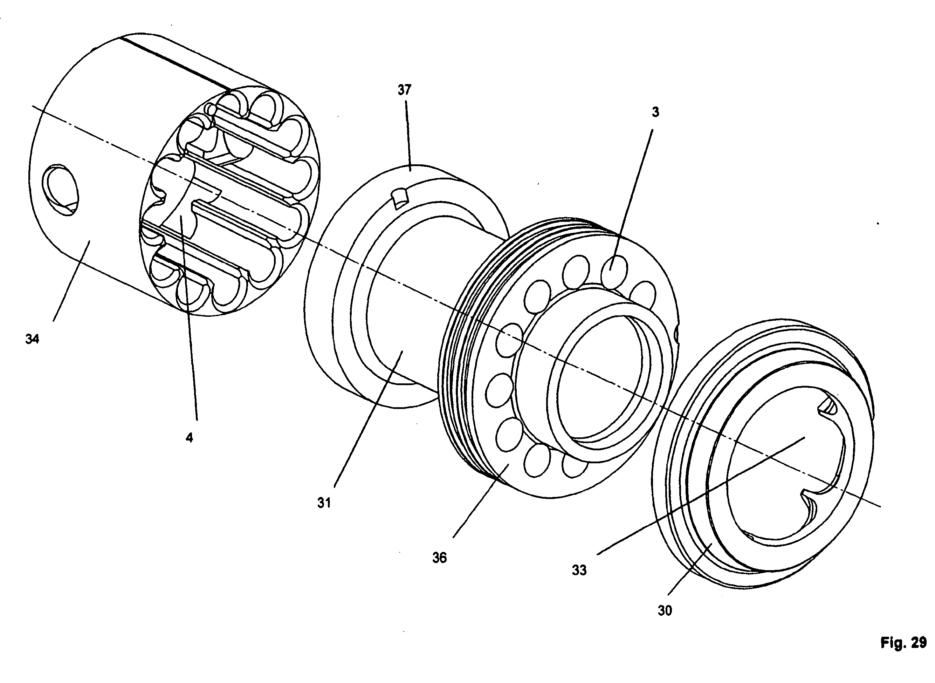

In den Figuren 26 bis 30 ist eine sechste Ausführungsform dargestellt, die nicht zur Erfindung gehört. Figur 26 zeigt eine perspektivische Ansicht der Kavität und Figur 29 eine Explosionsansicht.

Die Kavität ist dreiteilig ausgebildet und besteht aus einem Deckelelement 30, einem Hauptteil 31 sowie einem Mantel- bzw. Manschettenteil 34.

Das Hauptteil 31 besteht im wesentlichen aus einem Hohlzylinder, der in seinen beiden Endbereichen jeweils einen Kragenabschnitt 36, 37 aufweist. In dem vorderen Kragenabschnitt sind eine Reihe von axial verlaufenden Bohrungen eingebracht, die als axial verlaufende Kühlkanalabschnitte 3 dienen. Diese Bohrungen sind beidseitig offen.

Das Deckelelement 30 weist Ausfräsungen 33 auf, die in Umfangsrichtung verlaufen. Diese sind so angeordnet, daß sie die sich an der Stirnseite des vorderen Kragenabschnitts 36 öffnenden axial verlaufenden Kühlkanäle verlängern und teilweise miteinander verbinden. Es werden immer zwei benachbarte Kühlkanäle paarweise miteinander verbunden, so daß Kühlmittel, das durch einen axial verlaufenden Kühlkanal Richtung Deckelelement 30 strömt, durch die Ausfräsungen in den benachbarten Kühlkanal umgelenkt wird und dort in die entgegengesetzte Richtung strömt

Der Hauptteil der axial verlaufenden Kühlkanalabschnitte wird jedoch durch das Mantelteil 34 gebildet. Das Mantelteil weist einseitig eingebrachte axial verlaufenden Ausnehmungen (Nuten) auf. Wird das Mantelteil 34 um die zylindrische Außenfläche des Hauptteils 31 gelegt, so bilden die Ausnehmungen in dem Mantelteil 34 axial verlaufende Kühlkanäle. An der dem Deckelelement 30 abgewandten Seite sind paarweise die axial verlaufenden Kühlkanäle durch einen in Umfangsrichtung verlaufende Verbindungskanal, der den in Umfangsrichtung verlaufenden Kühlkanalabschnitt 4 bildet miteinander verbunden. Der Verbindungskanal 4 wird dadurch gebildet, daß benachbarte Nuten im Mantelteil miteinander verbunden werden, d.h. der sich zwischen den Nuten bildenden Steg verkürzt wird.

Weiterhin ist ein Kühlfluidzulauf 11 und -ablauf 12 vorgesehen. Wird über den Kühlfluidzulauf 11 die Kavität mit Kühlfluid versorgt, so ergibt sich der in Figur 5 schematisch dargestellte Verlauf. Auch hier ist der gesamte Kühlkanal mäanderförmig ausgebildet, wobei, um den Kühlmitteldurchfluß zu erhöhen, immer zwei benachbarte axial verlaufende Kühlkanäle parallel (und entgegengesetzt zu den nächsten beiden benachbarten axial verlaufenden Kühlkanäle) durchströmt werden.

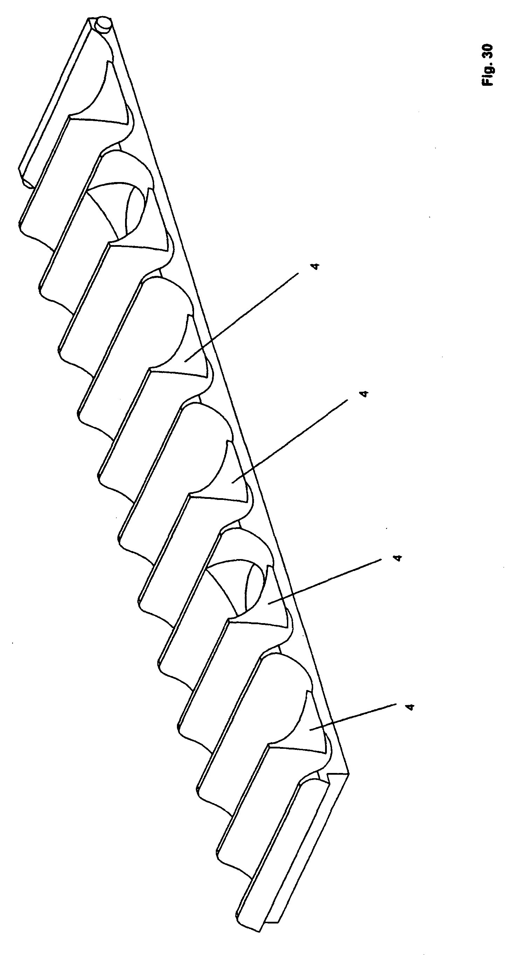

In Figur 30 ist das Mantelteil im abgerollten, d.h. ebenen Zustand dargestellt, so daß die Herstellung der Verbindungsabschnitte 4 deutlich zu erkennen ist.

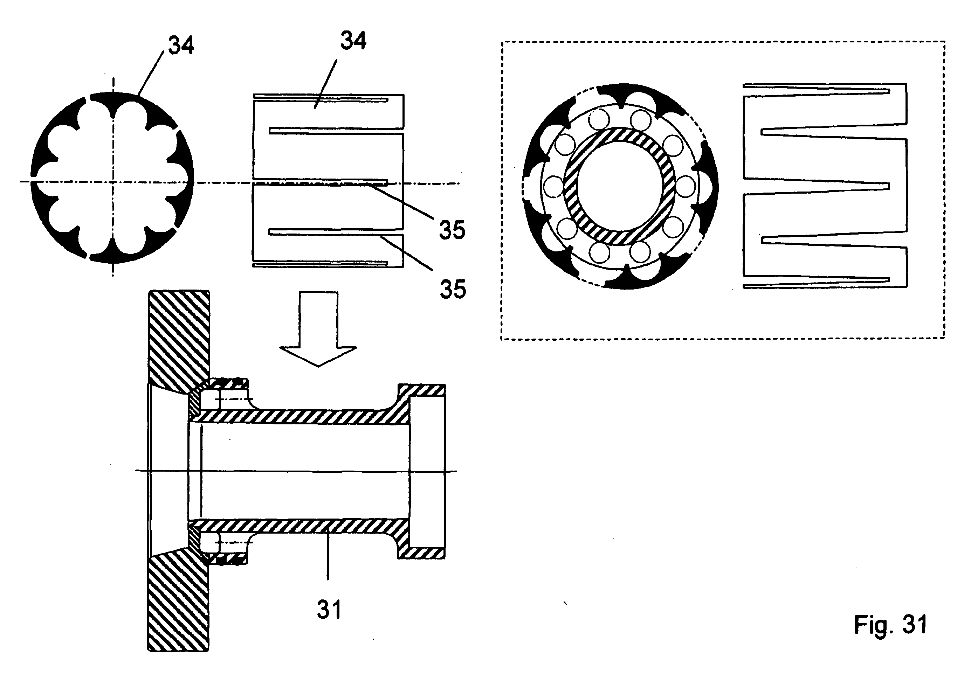

In Figur 31 Ist eine siebte Ausführungsform dargestellt, die nicht zur Erfindung gehört. Hier besteht das Mantelteil 34 aus einem flexiblen Material, wie z. B. POM. In der Figur 31 links oben ist eine Querschnittsansicht dargestellt. Man erkennt, daß das Mantelteil 34 auf beiden Seiten Einschnitte 35 aufweist, die wechselseitig ineinandergreifen, so daß im Grunde genommen das Mantelteil 34 mäanderförmig ausgebildet ist. Dies hat zur Folge, wie rechts oben In Figur 31 zu erkennen ist, daß das Mantelteil aufgrund seiner Elastizität etwas auseinandergezogen werden kann, so daß es auf das Hauptteil 31 aufgezogen werden kann. Aufgrund seines elastischen Verhaltens wird das Mantelteil 34 an die zylindrische Außenfläche des Hauptteils 31 gezogen.

Das Mantelteil 34 kann somit auf einfache Weise einstückig hergestellt werden und ohne Werkzeug montiert werden.

### Bezugszeichenliste

- 1: Kavität
- 2: hohlzylindrischer Abschnitt
- 3: in axialer Richtung verlaufende Kühlkanalabschnitte
- 4: im Umfangsrichtung verlaufende Kühlkanalabschnitte
- 5: Kragenelement
- 6: Ausnehmung im Kragenelement
- 7: Ausnehmungen
- 8: Formraum
- 9, 10: Bodeneinsatz
- 11: Fluidzula uf
- 12: Kühlfluidablauf
- 13: Verschließelement
- 14: Kavitätenplatte
- 15: Abschnitt innerhalb der Kavitätenplatte
- 16: Abschnitt außerhalb der Kavitätenplatte
- 17,17',17": Führungselemente
- 18: Durchgangsöffnung
- 19: Schweißpunkte
- 20: Fluidflußmuster
- 21, 22: Ringelemente
- 23: Bodeneinsatz
- 24: Umlenkelement
- 25: Kavitätenerweiterung
- 26: Kammelement
- 27: Spiralelement
- 28: Hülse
- 29: Nuten
- 30: Deckelelement
- 31: Hauptteil
- 32: Verbindungsnuten
- 33: Ausfräsungen
- 34: Mantelteil
- 35: Einschnitte
- 36: vorderer Kragenabschnitt
- 37: hinterer Kragenabschnitt

## Patentansprüche

1. Kavität für ein Formnest zur Herstellung von Hohlkörperformlingen, wobei die Kavität (1) ein im wesentlichen hohlzylindrisches Element (2) aufweist, wobei an der Außenseite des hohlzylindrischen Elements (2) ein Kühlkanal vorgesehen ist, wobei mehrere Führungselemente zur Bildung des Kühlkanals vorgesehen sind, wobei die Führungselemente und das hohlzylindrische Element als separate Teile ausgeführt sind, wobei das hohlzylindrische Element (2) an seiner Außenseite im wesentlichen an einem seiner Enden ein über die Außenseite des hohlzylindrischen Elements (2) hervorspringendes Ringelement (21, 22) aufweist, wobei die Führungselemente (17) an dem Ringelement (21, 22) und vorzugsweise nicht am hohlzylindrischen Element (2) befestigt sind.

2. Kavität nach Anspruch 1, **dadurch gekennzeichnet, dass** das hohlzylindrische Element (2) an seiner Außenseite im wesentlichen an seinen Enden jeweils ein über die Außenseite des hohlzylindrischen Elements (2) hervorspringendes Ringelement (21, 22) aufweist, wobei die Führungselemente (17) an den Ringelementen (21, 22) und vorzugsweise nicht am hohlzylindrischen Element (2) befestigt sind.

3. Kavität nach Anspruch 1 oder 2, **dadurch gekennzeichnet, daß** die Führungselemente (17) im wesentlichen lamellenförmig sind, wobei die Führungselemente (17) in axialer Richtung ausgerichtet sind, und vorzugsweise zumindest ein Teil der Führungselemente (17) vorzugsweise im wesentlichen im Bereich eines Endabschnittes des Führungselements (17) eine Durchgangsöffnung (18) aufweisen, welche die im wesentlichen in Umfangsrichtung angeordneten Kühlkanalabschnitte (4) bildet.

4. Kavität nach einem der Ansprüche 1 bis 3, **dadurch gekennzeichnet, daß** die Führungselemente (17) eine im wesentlichen rechteckförmige oder dreieckförmige Querschnittsfläche haben, wobei vorzugsweise die Führungselemente (17) an ihrer dem hohlzylindrischen Element (2) abgewandten Seite abgerundet sind.

5. Kavität nach einem der Ansprüche 1 bis 4, **dadurch gekennzeichnet, daß** der Kühlkanal mehrere sich im wesentlichen in axialer Richtung erstreckende Kühlkanalabschnitte (3) und mindestens einen Kühlkanalverbindungsabschnitt (4) aufweist, wobei der Kühlkanalverbindungsabschnitt (4) zwei der sich im wesentlichen in axialer Richtung erstreckende Kühlkanalabschnitte (3) verbindet, wobei vorzugsweise mindestens vier, besonders bevorzugt mindestens acht und am besten mindestens zwölf sich im wesentlichen in axialer Richtung erstreckende Kühlkanalabschnitte (3) vorgesehen sind.

6. Kavität nach Anspruch 5, **dadurch gekennzeichnet, daß** der Kühlkanalverbindungsabschnitt im wesentlichen in Umfangsrichtung an der Außenseite des hohlzylindrischen Elements (2) angeordnet ist.

7. Kavität nach einem der Ansprüche 1 bis 6, **dadurch gekennzeichnet, daß** die Kavität (1) einen Kragenteil mit einer Durchgangsöffnung aufweist, wobei das hohlzylindrische Element (2) zum Teil in der Durchgangsöffnung angeordnet ist, so daß die Durchgangsöffnung zum Teil von dem hohlzylindrischen Element (2) ausgefüllt wird.

8. Kavität nach einem der Ansprüche 5 bis 7, **dadurch gekennzeichnet, daß** zumindest ein Teil der sich im wesentlichen in Umfangsrichtung erstreckenden Kühlkanalabschnitte (4) an einer Stirnseite des hohlzylindrischen Teils (2) angeordnet sind, wobei vorzugsweise ein Verschlußelement (13) vorgesehen ist, welches die an der Stirnseite des hohlzylindrischen Elements (2) angeordneten, im wesentlichen in Umfangsrichtung verlaufenden Kühlkanalabschnitte (4) stirnseitig verschließt, und vorzugsweise das Verschlußelement (13) an das hohlzylindrische Element (2) angelötet ist und/oder das Verschlußelement (13) im wesentlichen ringförmig ausgebildet ist und vorzugsweise an der den Kühlkanalabschnitten (3, 4) abgewandten Seite einen Innenkonus aufweist.

9. Kavität nach einem der Ansprüche 1 bis 8, **dadurch gekennzeichnet, daß** als Führungselemente zwei Kammelemente mit Zinken vorgesehen sind, die derart angeordnet sind, daß die Zinken der beiden Kammelemente jeweils in die Zinkenzwischenräume des anderen Kammelementes eingreifen, wobei vorzugsweise die Kammelemente jeweils aus einem Ringelement und mindestens einem, vorzugsweise mehreren sich von dem Ringelement in Richtung der Ringachse erstreckenden Zinkenelementen bestehen.

10. Kavität nach einem der Ansprüche 1 bis 9, **dadurch gekennzeichnet, daß** der Kühlkanal einen im wesentlichen rechteckigen Querschnitt und/oder einen nach innen gewölbten Kanalgrund hat.

11. Kavität nach einem der Ansprüche 1 bis 10, **dadurch gekennzeichnet, daß** der Kühlkanal an seiner dem hohlzylindrischen Teil abgewandten Seite offen ist.

12. Formnest zur Herstellung von Hohlkörperformlingen mit einer Kavität (1) nach einem der Ansprüche 1 bis 11.

13. Werkzeug zu Herstellung von Hohlkörperformlingen mittels Spritzgießen mit einem Formnest nach Anspruch 12, **dadurch gekennzeichnet, daß** eine Kavitätenplatte (14) mit mindestens einer Ausnehmung vorgesehen ist, in der die Kavität (1) angeordnet ist, wobei vozugsweise die Kavitätenplatte (14) eine Kühlfluidzufuhr (11) und eine Kühlfluidabfuhr (12) aufweist, wobei Kühlfluidzufuhr und -abfuhr sowie der Kühlkanal der Kavität (1) derart angeordnet sind, daß sich zwischen Kühlfluidzufuhr und- abfuhr zwei parallele Kühlkreisläufe bilden und/oder in der Ausnehmung in der Kavitätenplatte ein Kühlfluidverteiler angeordnet ist, welcher zumindest zwei im wesentlichen axial verlaufenden Kühlkanalabschnitten (3) des hohlzylindrischen Elements (2) über einen innerhalb des Kühlfluidverteilers angeordneten Verbindungskanal miteinander verbindet, so daß der Verbindungskanal einen im wesentlichen in Umfangsrichtung angeordneten Kühlkanalabschnitt (4) bildet.

14. Werkzeug nach Anspruch 13, **dadurch gekennzeichnet, daß** eine Kavitätenerweiterung vorgesehen ist, die das hohlzylindrische Element und die darauf angeordneten Kühlkanäle zum Teil umschließt, wobei vorzugsweise die Kavitätenerweiterung hülsenförmig ausgebildet ist und vorzugsweise an ihrer Innenfläche Trennelemente aufweist, so daß ein Kühlkanal durch die Innenwand der Kavitätenerweiterung, deren Trennelemente und der Außenfläche des hohlzylindrischen Element gebildet wird.

15. Werkzeug nach Anspruch 14, **dadurch gekennzeichnet, daß** die Kavitätenerweiterung ein von der Kavitätenplatte und der Kavität getrenntes Element ist, wobei vorzugsweise Dichtelemente zwischen Kavitätenerweiterung und Kavitätenplatte sowie zwischen Kavitätenerweiterung und Kavität vorgesehen sind.

## Claims

1. A cavity member for a mold cavity structure for the production of hollow body moldings, wherein the cavity member (1) has a substantially hollow-cylindrical element (2), wherein a cooling passage is provided at the outside of the hollow-cylindrical element (2), wherein several guide elements for forming the cooling passage, wherein the hollow-cylindrical element (2) has at its outside and substantially at its ends a respective ring element (21, 22) projecting beyond the outside of the hollow-cylindrical element (2), wherein the guide elements (17) are fixed to the ring elements (21, 22) and preferably not to the hollow-cylindrical element (2).

2. A cavity member as set forth in claim 1 **characterised in that** the hollow-cylindrical element (2) has at its outside and substantially at its ends a ring element (21, 22) projecting beyond the outside of the hollow-cylindrical element (2), wherein the guide elements (17) are fixed to the ring elements (21, 22) and preferably not to the hollow-cylindrical element (2).

3. A cavity member as set forth in claim 1 or claim 2 **characterised in that** the guide elements (17) are substantially bar-shaped, wherein the guide elements (17) are oriented in the axial direction, and that at least some of the guide elements (17) preferably have substantially in the region of an end portion of the guide element (17) a through opening (18) forming the cooling passage portions (4) arranged substantially in the peripheral direction.

4. A cavity member as set forth in one of claims 1 through 3 **characterised in that** the guide elements (17) preferably have a substantially rectangular or triangular cross-sectional area, wherein preferably the guide elements (17) are rounded at their side remote from the hollow-cylindrical element (2).

5. A cavity member as set forth in one of claims 1 through 4 **characterised in that** the cooling passage has a plurality of cooling passage portions (3) extending substantially in the axial direction and at least one cooling passage connecting portion (4), wherein the cooling passage connecting portion (4) connects two cooling passage portions (3) extending substantially in the axial direction, wherein there are at least four, particularly preferable at least eight and best at least twelve cooling passage portions (3) extending substantially in the axial direction.

6. A cavity member as set forth in claim 5 **characterised in that** the cooling passage connecting portion is arranged substantially in the peripheral direction at the outside of the hollow-cylindrical element (2).

7. A cavity member as set forth in one of claims 1 through 6 **characterised in that** the cavity member (1) has a collar portion with a through opening, wherein the hollow-cylindrical element (2) is in part arranged in the through opening so that the through opening is filled in part by the hollow-cylindrical element (2).

8. A cavity member as set forth in one of claims 5 through 7 **characterised in that** at least some of the cooling passage portions (4) extending substantially in the peripheral direction are arranged at an end of the hollow-cylindrical element (2), wherein preferably there is provided a closure element (13) which at the end closes the cooling passage portions (4) which are arranged at the end of the hollow-cylindrical element (2) and which extend substantially in the peripheral direction, and preferably the closure element (13) is soldered to the hollow-cylindrical element (2) and/or the closure element (13) is of a substantially annular configuration and preferably has an internal cone at the side remote from the cooling passage portions (3, 4).

9. A cavity member as set forth in one of claims 1 to 8 **characterised in that** two comb elements with teeth are provided as the guide elements, the comb elements being so arranged that the teeth of the two comb elements respectively engage into the inter-tooth spaces of the other comb element, wherein preferably the comb elements respectively comprise a ring element and at least one and preferably a plurality of tooth elements extending from the ring element in the direction of the ring axis.

10. A cavity member as set forth in one of claims 1 through 9 **characterised in that** the cooling passage is of a substantially rectangular cross-section and/or an inwardly curved passage base.

11. A cavity member as set forth in one of claims 1 through 10 **characterised in that** the cooling passage is open at its side remote from the hollow-cylindrical part.

12. A mold cavity structure for the production of hollow body moldings comprising a cavity member (1) as set forth in one of claims 1 through 11.

13. A tool for the production of hollow body moldings by means of injection molding comprising a mold cavity structure as set forth in claim 12 **characterised in that** there is provided a cavity plate (14) having at least one recess in which the cavity member (1) is arranged, wherein preferably the cavity plate (14) has a cooling fluid feed (11) and a cooling fluid discharge (12), wherein the cooling fluid feed and discharge as well as the cooling passage of the cavity member (1) are so arranged that two parallel cooling circuits are formed between the cooling fluid feed and discharge and/or arranged in the recess in the cavity plate is a cooling fluid distributor which connects together at least two substantially axially extending cooling passage portions (3) of the hollow-cylindrical element (2) by way of a connecting passage arranged within the cooling fluid distributor so that the connecting passage forms a cooling passage portion (4) arranged substantially in the peripheral direction.

14. A tool as set forth in claim 13 **characterised in that** there is provided a cavity enlargement which partially embraces the hollow-cylindrical element and the cooling passages arranged thereon, wherein preferably the cavity enlargement is of a sleeve-shaped configuration and preferably has at its inside surface separating elements so that a cooling passage is formed by the inside wall of the cavity enlargement, the separating elements thereof and the outside surface of the hollow-cylindrical element.

15. A tool as set forth in claim 14 **characterised in that** the cavity enlargement is an element which is separate from the cavity plate and the cavity member, wherein preferably sealing elements are provided between the cavity enlargement and the cavity plate and between the cavity enlargement and the cavity member.

## Revendications

1. Cavité pour un moule destiné à créer des corps creux moulés, la cavité (1) présentant un élément (2) sensiblement cylindrique creux, un canal de refroidissement étant prévu sur le côté extérieur de l'élément (2) cylindrique creux, plusieurs éléments de guidage étant prévus pour former le canal de refroidissement, les éléments de guidage et l'élément cylindrique creux étant réalisés comme composants séparés, l'élément cylindrique creux (2) présentant sur son côté extérieur sensiblement sur l'une de ses extrémités un élément annulaire (21, 22) faisant saillie sur le côté extérieur de l'élément cylindrique creux (2), les éléments (17) de guidage étant fixés à l'élément annulaire (21, 22) et de préférence n'étant pas fixés à l'élément cylindrique creux (2).

2. Cavité selon la revendication 1, **caractérisée en ce que** l'élément cylindrique creux (2) présente sur son côté extérieur sensiblement sur l'une de ses extrémités un élément annulaire (21, 22) faisant saillie sur le côté extérieur de l'élément cylindrique creux (2), les éléments (17) de guidage étant fixés à l'élément annulaire (21, 22) et de préférence n'étant pas fixés à l'élément cylindrique creux (2).

3. Cavité selon la revendication 1 ou 2, **caractérisée en ce que** les éléments (17) de guidage sont sensiblement en lamelles, les éléments (17) de guidage étant alignés dans la direction axiale et de préférence au moins une partie des éléments (17) de guidage présentent de préférence sensiblement au niveau d'une section d'extrémité des éléments (17) de guidage une ouverture (18) de passage qui forme les sections (4) de canal de refroidissement orientées sensiblement dans le sens circonférentiel.

4. Cavité selon l'une des revendications 1 à 3, **caractérisée en ce que** les éléments (17) de guidage possèdent une surface de section transversale sensiblement sous une forme rectangulaire ou triangulaire, de préférence les éléments (17) de guidage ont leur côté opposé à l'élément cylindrique creux (2) arrondi.

5. Cavité selon l'une des revendications 1 à 4, **caractérisée en ce que** le canal de refroidissement présente plusieurs sections (3) de canal de refroidissement s'étendant sensiblement dans la direction axiale et au moins une section (4) de connexion de canal de refroidissement, la section (4) de connexion de canal de refroidissement reliant deux des sections (3) de canal de refroidissement s'étendant sensiblement dans la direction axiale, cavité dans laquelle de préférence au moins quatre et idéalement au moins huit et mieux encore douze sections (3) de canal de refroidissement s'étendant sensiblement dans la direction axiale sont prévues.

6. Cavité selon la revendication 5, **caractérisée en ce que** la section de connexion de canal de refroidissement est disposée sensiblement dans le sens circonférentiel sur le côté extérieur de l'élément cylindrique creux (2).

7. Cavité selon l'une des revendications 1 à 6, **caractérisée en ce que** la cavité (1) comporte une partie collerette avec une ouverture de passage, l'élément cylindrique creux (2) étant en partie disposé dans l'ouverture de passage de telle sorte que l'ouverture de passage est comblée en partie par l'élément cylindrique creux (2).

8. Cavité selon l'une des revendication 5 à 7, **caractérisée en ce qu'**au moins une partie des sections (4) de canal de refroidissement s'étendant sensiblement dans le sens circonférentiel (4) est disposée sur la face frontale de la partie de l'élément cylindrique creux (2), de préférence un élément (13) de fermeture étant prévu, ledit élément (13) de fermeture ferme de façon frontale les sections (4) de canal de refroidissement orientées sensiblement dans le sens circonférentiel disposées sur la face frontale de l'élément cylindrique creux (2), et de préférence l'élément (13) de fermeture étant brasé sur l'élément cylindrique creux (2), et/ou l'élément (13) de fermeture étant sensiblement conçu en forme d'anneau et de préférence présentant un cône intérieur sur le côté opposé des sections (3, 4) de canal de refroidissement.

9. Cavité selon l'une des revendications 1 à 8, **caractérisée en ce que** deux éléments de peigne sont prévus comme élément de guidage, lesdits éléments de peigne étant disposés de telle sorte que chacune des dents des deux éléments de peigne s'engrènent dans les espaces intermédiaires de l'autre élément de peigne, les éléments de peigne étant chacun de préférence composé d'un élément annulaire et d'au moins un et de préférence de plusieurs éléments à dents s'étendant en partant de l'élément annulaire dans le sens de l'axe annulaire.

10. Cavité selon l'une des revendications 1 à 9, **caractérisée en ce que** le canal de refroidissement possède une coupe transversale sensiblement orthogonale, et/ou une base de canal concave.

11. Cavité selon l'une des revendications 1 à 10, **caractérisée en ce que** le canal de refroidissement a son côté opposé au composant cylindrique creux ouvert.

12. Moule destiné à créer des corps creux moulés avec une cavité (1) selon l'une des revendications 1 à 11.

13. Outil destiné à créer des corps creux moulés par moulage par injection avec un moule selon la revendication 12, **caractérisé en ce qu'**une plaque (14) à cavités est dotée d'au moins un évidemment dans lequel est disposée la cavité (1), la plaque à cavités (14) comprenant de préférence une alimentation (11) de fluide de refroidissement et une évacuation (12) du fluide de refroidissement, l'alimentation et l'évacuation de fluide de refroidissement ainsi que le canal de refroidissement de la cavité (1) étant disposées de telle sorte que deux circuits de refroidissement parallèles se forment entre l'alimentation et l'évacuation de fluide de refroidissement et/ou **en ce qu'**un répartiteur de fluide est disposé à l'intérieur de l'évidemment dans la plaque à cavités, lequel relie entre elles au moins deux sections (3) de canal de refroidissement de l'élément cylindrique creux (2) orientées sensiblement dans la direction axiale au-dessus d'un canal de liaison disposé à l'intérieur du répartiteur de fluide, de telle sorte que le canal de liaison forme une section (4) de canal de refroidissement disposée sensiblement dans le sens circonférentiel.

14. Outil selon la revendication 13, **caractérisé en ce qu'**il est prévu un élargissement des cavités qui, entoure l'élément cylindrique creux et en partie les canaux de refroidissement disposés sur ce dernier, l'élargissement des cavités étant conçu de préférence en forme de douille et de préférence présente des éléments séparateurs sur sa surface intérieure, de telle sorte qu'un canal de refroidissement est formé par la paroi intérieure de l'élargissement des cavités, les éléments séparateurs de celui-ci et par la paroi intérieure de la surface extérieure de l'élément cylindrique creux.

15. Outil selon la revendication 14, **caractérisé en ce que** l'élargissement des cavités est un élément séparé de la plaque à cavités et de la cavité, des éléments d'étanchéité étant prévus de préférence entre l'élargissement des cavités et la plaque à cavités ainsi qu'entre l'élargissement des cavités et la cavité.
